# EUROPEAN PATENT SPECIFICATION

(11) **EP 4 368 312 B1**
(45) Date of publication and mention of the grant of the patent: **29.04.2026**
(21) Application number: 22206692.0
(22) Date of filing: 10.11.2022
(51) Int. Cl.: B22F 10/14, B33Y 10/00, B33Y 80/00, C22C 1/10, C22C 29/06, B22D 19/02

(54) **METHOD OF MAKING A CEMENTED CARBIDE BASED COMPOSITE ARTICLE AND CEMENTED CARBIDE ARTICLE THEREOF**
VERFAHREN ZUR HERSTELLUNG EINES HARTMETALL-BASIERTEN VERBUNDARTIKELS UND EINES ENTSPRECHENDEN HARTMETALLARTIKELS
PROCÉDÉ DE FABRICATION D'UN ARTICLE COMPOSITE À BASE DE CARBURE CÉMENTÉ ET D'UN ARTICLE EN CARBURE CÉMENTÉ CORRESPONDANT

(43) Date of publication of application: 15.05.2024
(73) Proprietor: Sandvik SRP AB, 233 81 Svedala (SE)
(72) Inventor: ESBELANI, Hodin, 23381 Svedala (SE)
(74) Representative: Sandvik

(56) References cited:
- WO-A1-2021/184057
- WO-A1-2021/191199
- WO-A1-2021/228357
- WO-A1-2022/122393
- WO-A2-2010/021802
- CN-A- 108 380 850
- US-A1- 2018 369 905

## Description

### Field of the Invention

The present invention relates to a cemented carbide based composite article that finds utility as a part of a wear part. A method of manufacturing a cemented carbide based composite article is also described.

### Background to the Invention

Sandvik has a high performance wear material, which is a composite material that is used mainly for liners for the mining and construction industry but also other wear parts with complex geometries. The composite material is a combination of nodular iron and cemented carbide (CC) granules or CC tiles. The material is produced by traditional sand casting. The granules consist of partly recycled Sandvik inserts with various grades.

The granules are the main components of the wear material used for liners and other wear parts. CC tiles are also used, but not as frequently as CC granules. The production of wear liners using CC granules is cumbersome and difficult, primarily due to the coarse granular nature of the cemented carbide granules which makes it difficult to accurately place the granules in a sand mould and retain them in a correct position. This limits the geometries of wear resistant parts that can be cast, and also increases the risk of scrappage.

It is an object of the invention to overcome at least one of the above-referenced problems.

From WO 2022/122393 A1 there is known a hierarchical composite wear component comprising a reinforced part comprising a reinforcement of a triply periodic minimal surface ceramic lattice structure. The structure comprising multiple cell units comprising voids and micro-porous ceramic cell walls walls comprising a sinter metal or a cast metal, the ceramic lattice structure being embedded in a bi-continuous structure with a cast metal matrix.

From WO 2021/228357 A1 there is known a method of producing a composite product comprising cemented carbide tiles embedded in a metal surface thereof. From WO 2021/184057 A1 there is known a composite body and a method for producing an integrally cast composite body, which includes at least two zones. A first zone is substantially formed of metal material, and, a second zone additionally includes a non-metallic reinforcing material, such as cement carbide. The composite body is particularly useful for producing products which have at least one wear resistant zone or surface.

From WO 2010/021802 A2 there is known an article including a cemented carbide piece and a joining phase that binds the cemented carbide piece into the article. From US 2018/369905 A1 there is known a powder composition used for the fabrication of casting inserts, designed to produce local composite zones resistant to abrasive wear. The composite zones are reinforced with carbides and borides or with mixtures thereof formed in situ in castings.

From WO 2021/191199 A1 there is known a hierarchical composite wear component comprising a reinforcement in the most exposed part to wear, the reinforcement comprising a three-dimensionally interconnected network of periodically alternating millimetric ceramic-metal composite granules with millimetric interstices.

From CN 108 380 850 A1 there is known a ceramic particle multi-scale reinforced metal base composite wear-resistant raking tooth head and a manufacturing method of the ceramic particle multi-scale reinforced metal base composite wear-resistant raking tooth head.

### Summary of the Invention

The Applicant has addressed the problems of the prior art by providing a method of making a cemented carbide based composite and a cemented carbide based composite article according to claims 1 and 8 respectively, and further embodiments of the invention are specified in dependent claims 2-7 and 9.

In the present invention, the insert is a 3D printed cemented carbide scaffold having an open framework that can mimic the properties of the cemented carbide granules. These "sponge-like" structures (e.g., 3D printed porous scaffolds) are much easier to handle and place in the mould than cemented carbide granules. Also, the use of 3D printed cemented carbides scaffolds enables the production of articles having complex geometrical structures as well as faster and more stable production, while also reducing scrappage. In a separate but related aspect, the cemented carbide insert may comprise surface depressions (e.g., dimples). During use as a wear part, when the softer iron matrix wears away, the dimples can fill with bulk material fines, which improves the functionality of the wear part by providing a stone-on-stone contact that prolongs the life of the wear part.

There is also a benefit in reducing the weight of the cemented carbide components whilst retaining the wear resisting performance of the part. This is possible due to the possibilities presented by the 3D printing technology, allowing for optimized cemented carbide geometries that promote wear life while at the same time reducing the weight of the cemented carbide components. Reducing the weight of the cemented carbide components will directly result in cost savings and thus a more cost-effective production process and product.

In any embodiment, the scaffold having an open framework comprises a lattice structure.

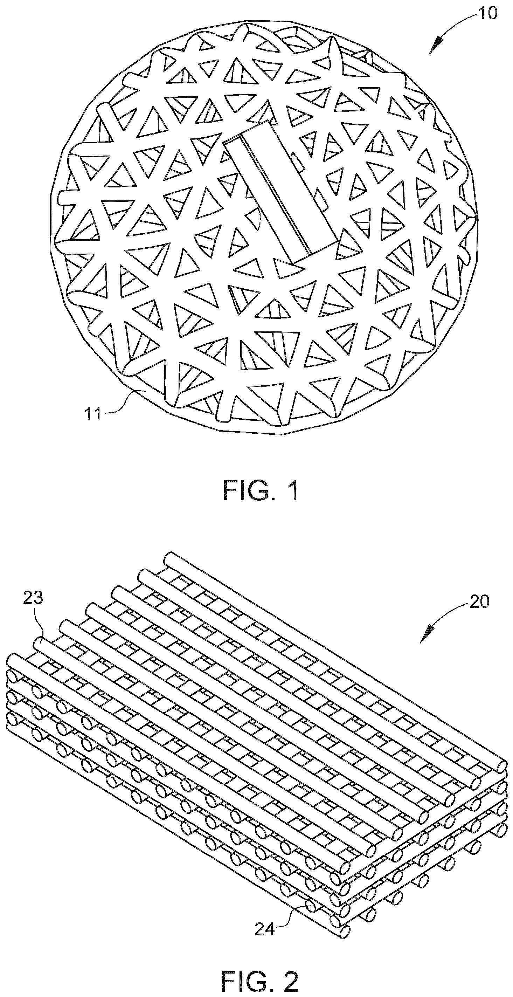

Examples of open framework scaffolds are provided in Figures 1 to 8.

In any embodiment, the lattice structure of the scaffold comprises a regular periodic configuration of structural units arranged together.

In any embodiment, the cemented carbide insert is a cemented carbide plate having surface dimples.

In any embodiment, the cemented carbide based composite article is configured to form part of a wear part, for example a wear part of a bulk material crusher or a bulk material handling system.

In any embodiment, the 3D printed cemented carbide porous scaffold has a volume porosity of up to 99%, for example at least 50%.

In any embodiment, the lattice structure comprises a plurality of cemented carbide struts including first cemented carbide struts extending in a first direction and second cemented carbide struts extending in a second direction different to the first direction to form the lattice structure.

In any embodiment, the 3D printed cemented carbide porous scaffold is tile shaped. In any embodiment, the tile has a square, rectangular, polygonal, round, oval, or triangular footprint.

In any embodiment, the 3D printed cemented carbide porous scaffold is spherical, hemi-spherical, or pyramidical.

In any embodiment, a plurality of 3D printed cemented carbide porous scaffolds are placed into the mould. The tiles may be arranged together in the same plane in the mould.

In any embodiment, the plurality of 3D printed cemented carbide porous scaffolds are dimensioned to fit together to form a composite scaffold structure within the mould.

In any embodiment, the 3D printed cemented carbide porous scaffold has a lattice structure comprising a first cemented carbide surface and a second cemented carbide surface spaced from the first cemented carbide surface by cemented carbide sidewalls, wherein one or both cemented carbide surfaces, and optionally the sidewalls, comprise an array of apertures.

In any embodiment, the iron matrix is nodular iron. Other iron matrices that may be employed include white iron, high chromium iron and iron alloys such as steel.

In any embodiment, the wear part is a wear part of a bulk material crusher or a bulk material handling device.

Other aspects and preferred embodiments of the invention are defined and described in the other claims set out below.

### Brief Description of the Figures

**Figure 1** illustrates a dome shaped 3D printed cemented carbide scaffold of the invention having an open framework lattice structure.
**Figure 2** illustrates a tile-shaped 3D printed cemented carbide scaffold of the invention having an open framework lattice structure.
**Figure 3** illustrates a dome shaped 3D printed cemented carbide scaffold of the invention having an open framework lattice structure.
**Figure 4** illustrates a tile-shaped 3D printed cemented carbide scaffold of the invention having an open framework lattice structure.
**Figure 5** illustrates a tile-shaped 3D printed or pressed cemented carbide scaffold of the invention having an open framework lattice structure comprising a regular periodic arrangement of cylindrical spur structures.
**Figure 6** illustrates a tile-shaped 3D printed or pressed cemented carbide scaffold of the invention having an open framework lattice structure comprising a regular periodic array of apertures.
**Figure 7** illustrates a tile-shaped 3D printed cemented carbide scaffold of the invention having an open framework lattice structure comprising a regular periodic arrangement of cylindrical hexagonal structures.
**Figure 8** illustrates a tile-shaped 3D printed or pressed cemented carbide scaffold of the invention having an open framework lattice structure comprising rows of wavy struts and columns of straight struts.
**Figure 9** illustrates a sand mould with a plurality of 3D printed cemented carbide scaffolds of Figure 4 being placed into the mould and arranged together to form a composite based on a 3D printed cemented carbide scaffold within the mould.
**Figure 10** is a detailed view of part of Figure 9.

### Detailed Description of the Invention

All publications, patents, patent applications and other references mentioned herein are hereby incorporated by reference in their entireties for all purposes as if each individual publication, patent or patent application were specifically and individually indicated to be incorporated by reference and the content thereof recited in full.

### Definitions and general preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and vice versa. The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g., a feature, element, characteristic, property, method/process step or limitation) or group of integers (e.g., features, element, characteristics, properties, method/process steps or limitations) but not the exclusion of any other integer or group of integers. Thus, as used herein the term "comprising" is inclusive or openended and does not exclude additional, unrecited integers or method/process steps.

As used herein, the term "cemented carbide" refers to a hard alloy that is a composite of a carbide and a metallic binder in which the carbide forms a dispersed phase, and the metallic binder forms a continuous phase. Cemented carbides are 3D printed followed by sintering. In one aspect of the present invention, the cemented carbide is 3D printed into a scaffold having an open framework, and then placed in a mould where it is cast in an iron matrix to provide the cemented carbide based composite article. In another aspect, the cemented carbide insert has surface depressions (dimples) configured to receive bulk material fines during use. The cemented carbide insert may comprise any type of carbides such as tungsten, chromium, tantalum or niobium. The details of such carbides forms part of the common general knowledge in the field. The iron matrix is preferably nodular iron, white iron, high chromium iron or an iron alloy such as steel.

As used herein, the term "article" refers to a machine part, instrument or tool that is exposed during normal operation to great wear, examples include cutting tips of cutting tools or wear parts (or parts thereof), or liners used in mining machinery and material handling, particularly wear parts of bulk material crushers such as impact crushers, cone crushers and jaw crushers. The article is formed by casting a cemented carbide insert in an iron matrix, preferably a nodular iron matrix. The insert is 3D printed. The insert is a scaffold having an open framework. The insert may be a plate or tile or have any other shape, for example dome shape or pyramidical shape.

As used herein, the term "casting" refers to a process in which the cemented carbide insert is placed into a mould and then a molten iron matrix is added to the mould to form the cast cemented carbide based composite article. Typically, the article is formed by sand moulding (sand casting), which involves making a pattern of the article and gates and risers, forming a mould around the pattern, placing one or more cemented carbide inserts within the mould, and then pouring molten iron matrix into the mould to cast the article.

As used herein, the term "3D printed cemented carbide scaffold" refers to a 3D scaffold formed of cemented carbide which is formed by 3D printing and has an open framework. The open framework allows the iron matrix to permeate through the scaffold during casting to provide a cast article with one or more 3D printed cemented carbide scaffolds encased within the iron matrix and a very high degree of contact between the matrix and the scaffold. The scaffold typically has a volume porosity of up to 99%, and in some embodiments at least 50%, 60%, 70%, 80% or 90%. The scaffold may be formed of cemented carbide struts, for example having at least one set of struts extending in a first direction and a second set of struts that extend in a second direction different to the first. A scaffold may comprise straight, curved, circular, triangular and polygonal shaped struts, or any combination thereof. The scaffold may also comprise at least two spaced apart cemented carbide plates and sidewalls connecting the plates, in which each plate (and optionally the sidewalls) includes a plurality of through-apertures to provide a porous scaffold. The scaffold may comprise a regular periodic configuration of structural units, generally arranged together in a single plane. The 3D scaffold may be cuboid, hemispherical, dome shaped, cylindrical, conical, frustoconical, pyramidical or frusto pyramidical, or any other shape that can be 3D printed. The scaffold may have a shape that corresponds to the shape of the wear plate. As the scaffold is 3D printed, it is possible to form scaffolds having complex geometrical shapes and thereby cast wear plates and other articles having such complex geometrical shapes, which is not possible when using particulate carbide granules in the casting.

As used herein, the term "lattice structure" as applied to the 3D printed cemented carbide porous scaffold means that the scaffold has an open framework structure with a large volume of void areas for receipt of metallic binder during casting. Examples of scaffolds with lattice structures are provided in Figures 1 to 8.

As used herein, the term "iron matrix" refers to a matrix comprising a high level of iron, for example nodular iron, white iron, high chromium iron and steel. The iron material used for the matrix is heated until molten and then poured into the mould.

### Exemplification

The invention will now be described with reference to specific examples. These are merely exemplary and for illustrative purposes only: they are not intended to be limiting in any way to the scope of the monopoly claimed or to the invention described. These examples constitute the best mode currently contemplated for practicing the invention.

### 3D Printed Cemented Carbide Porous Scaffold

3D printed cemented carbide scaffolds for use in the method and articles of the invention are illustrated in Figures 1 to 10. These may be prepared by 3D printing using the methods described in EP3134222 and US10144065. For example, cemented carbide powder may be 3D printed to form a first layer of a structure, a binder may then be applied to the printed 3D powder, and this process repeated in an iterative matter to build up the 3D cemented carbide scaffold before the scaffold is sintered. This is detailed in Example 1 of US10144065.

Figure 1 illustrates a dome shaped 3D printed cemented carbide scaffold of the invention, indicated generally by the reference numeral 10 and comprising 3D printed struts 11 arranged in a 3D open framework lattice structure.

Figure 2 illustrates a tile-shaped 3D printed cemented carbide scaffold of the invention indicated generally by the reference numeral 20. The scaffold has a rectangular tile shape having a length, width and height of X, Y and Z cm, and is formed from seven layers of 3D printed cemented carbide struts 11 including four layers of longitudinal struts 23 and three layers of transverse struts 24 that are arranged alternately to form an open framework lattice.

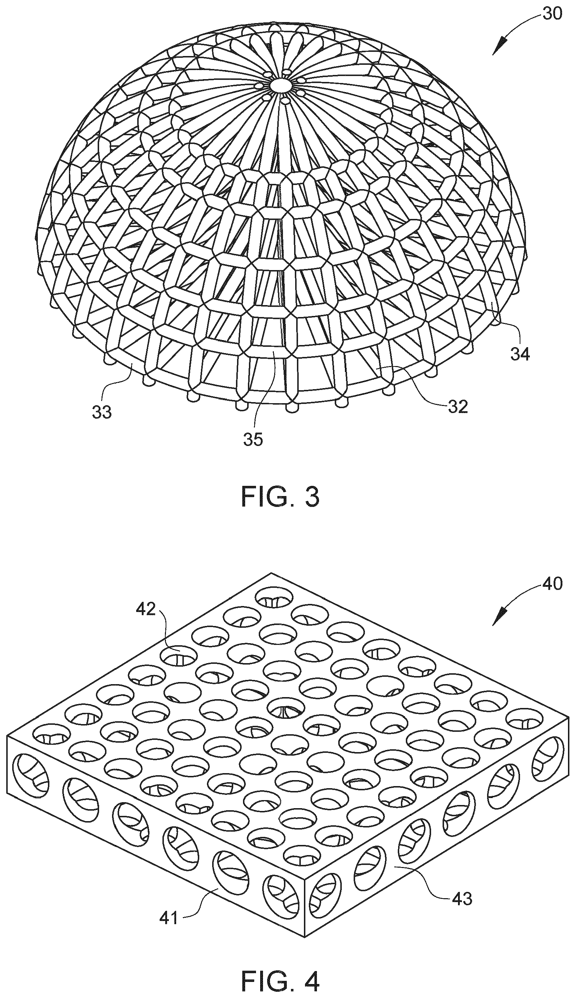

Figure 3 illustrates a dome shaped 3D printed cemented carbide scaffold of the invention, indicated generally by the reference numeral 30 and comprising 3D printed struts 11 including curved longitudinal surface struts 32 and circular latitudinal surface struts 33 that overlap at points 34, and radial struts 35 that extend from the overlap points 34 radially inwardly. The scaffold has an open framework.

Figure 4 illustrates a tile-shaped 3D printed cemented carbide scaffold of the invention indicated generally by the reference numeral 40. The scaffold has a square tile shape and is formed from a first surface plate 41 and second surface plate 42 spaced from the first surface plate 41 by sidewalls 43. Each of the plates 41, 42 includes a regular array of multiple apertures, providing a cemented carbide scaffold with an open framework.

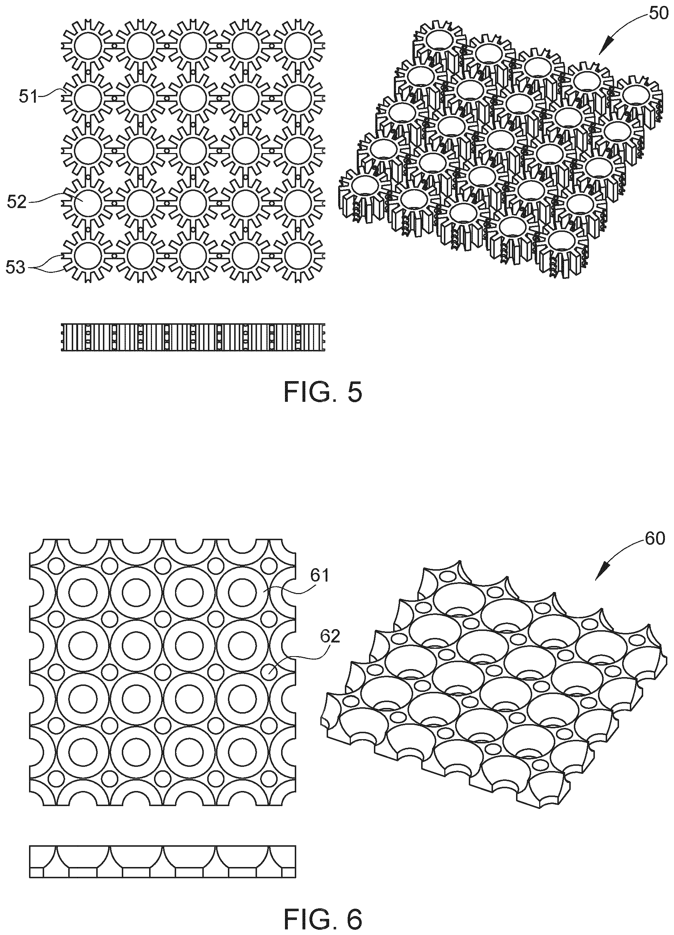

Figure 5 illustrates a tile-shaped 3D printed or pressed cemented carbide scaffold of the invention indicated generally by the reference numeral 50. The scaffold comprises a regular array of circular spurs 51 arranged in the same plane in five rows and five columns. Each spur 51 has a cylindrical core 52 and a series of fins 53 extending radially from the core 52 providing an open framework scaffold.

Figure 6 illustrates a tile-shaped 3D printed or pressed cemented carbide scaffold of the invention indicated generally by the reference numeral 60. The scaffold comprises a regular array of frustoconical through holes 61 and a regular array of smaller cylindrical through holes 62 providing a scaffold with an open framework.

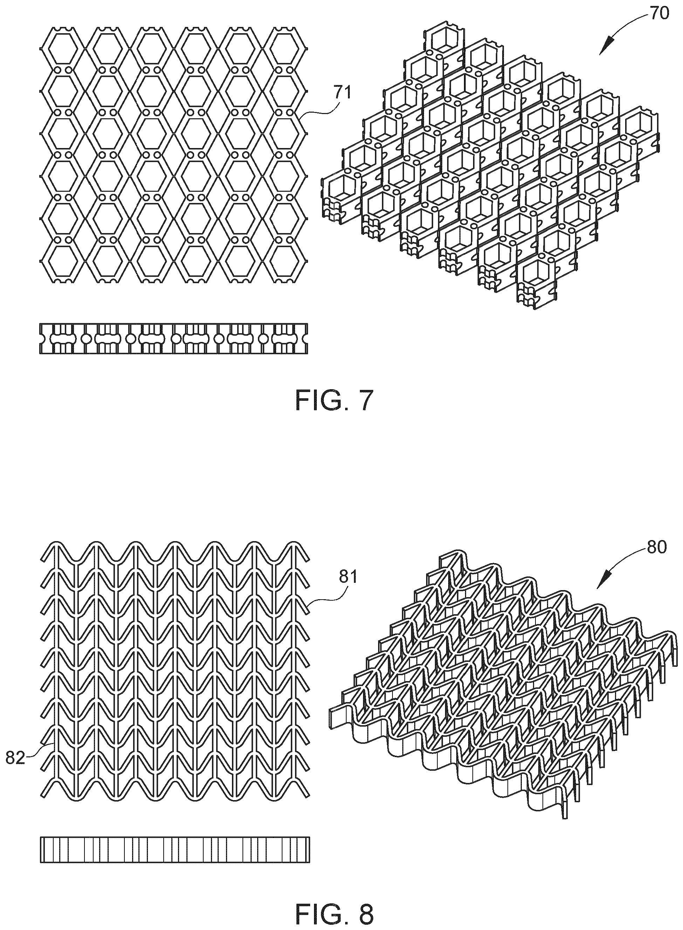

Figure 7 illustrates a tile-shaped 3D printed cemented carbide scaffold of the invention indicated generally by the reference numeral 70. The scaffold comprises a regular array of hexagonal cylinders 71 attached together in a single plane forming a scaffold with an open framework.

Figure 8 illustrates a tile-shaped 3D printed or pressed cemented carbide scaffold of the invention indicated generally by the reference numeral 80. The scaffold comprises a lattice formed from rows of undulating struts 81 and columns of straight struts 82 providing the scaffold with an open framework.

### Casting Cemented Carbide based composite Article

A sand mould is prepared according to traditional sand-casting practices using a wooden, plastic or composite casting model. The procedure of the casting is no different from traditional sand casting with the distinction that cemented carbide insert(s) are placed within the sand mould prior to the pouring of the molten metal, creating the cemented carbide based composite article comprising a cemented carbide insert cast within an iron matrix.

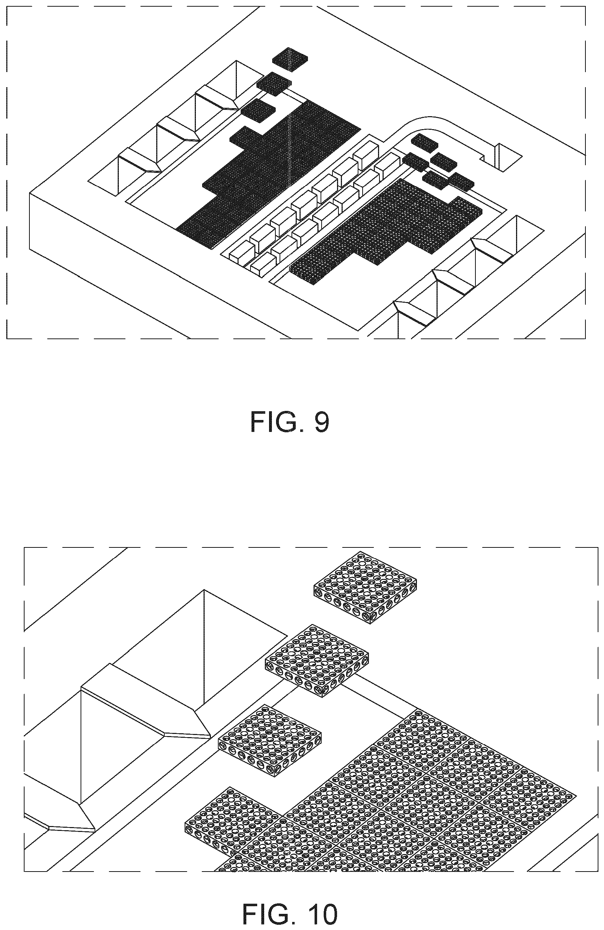

Figures 9 and 10 illustrate a plurality of tile shaped 3D printed cemented carbide scaffolds being placed into a mould and arranged together to form a composite cemented carbide scaffold, prior to addition of the liquid metallic binder.

## Claims

1. A method of making a cemented carbide based composite article, the cemented carbide based composite article being a wear part or part thereof, the method comprising:
placing at least one cemented carbide insert (10, 20, 30, 40, 50, 60, 70, 80) into a mould; and
casting the cemented carbide insert in an iron matrix in the mould to form the cemented carbide based composite article,
wherein the cemented carbide based composite insert is a scaffold having an open framework and in which the cemented carbide insert is 3D printed followed by sintering.

2. The method according to Claim 1, in which the open framework of the porous scaffold has a lattice structure,

3. The method according to Claim 1 or 2, wherein the lattice structure of the porous scaffold comprises a regular periodic configuration of structural units arranged together.

4. The method according to Claim 1 to 3, in which the cemented carbide insert comprises a body with surface depressions configured to receive bulk material fines during use.

5. A method according to any preceding Claim 1 to 4, in which a plurality of cemented carbide inserts are placed into the mould and arranged together to form a composite insert.

6. A method according to any preceding Claim 1 to 5, in which the cemented carbide based composite article is cast in a sand mould.

7. A method according to any preceding Claim 1 to 6 in which the iron matrix is nodular iron.

8. A cemented carbide based composite article obtained by a method of any of Claims 1 to 7.

9. A wear part of a bulk material crusher or bulk material handling device, comprising at least one cemented carbide based composite article according to claim 8.

## Patentansprüche

1. Verfahren zum Herstellen eines Verbundartikels auf Hartmetallbasis, wobei der Verbundartikel auf Hartmetallbasis ein Verschleißteil oder ein Teil davon ist, wobei das Verfahren Folgendes umfasst:
Einlegen von mindestens einem Hartmetalleinsatz (10, 20, 30, 40, 50, 60, 70, 80) in eine Form; und
Gießen des Hartmetalleinsatzes in eine Eisenmatrix in der Form zur Herstellung des Verbundartikels auf Hartmetallbasis,
wobei der Hartmetall-basierte Verbundeinsatz ein Träger mit offenem Gerüst ist und der Hartmetalleinsatz 3D-gedruckt und anschließend gesintert wird.

2. Verfahren nach Anspruch 1, wobei das offene Gerüst des porösen Trägers eine Gitterstruktur aufweist,

3. Verfahren nach Anspruch 1 oder 2, wobei die Gitterstruktur des porösen Trägers eine regelmäßige periodische Konfiguration von zusammen angeordneten Struktureinheiten umfasst.

4. Verfahren nach Anspruch 1 bis 3, wobei der Hartmetalleinsatz einen Körper mit Oberflächenvertiefungen umfasst, die so konfiguriert sind, dass sie während des Gebrauchs Feinteile eines Schüttguts aufnehmen.

5. Verfahren nach einem vorstehenden Anspruch 1 bis 4, wobei eine Vielzahl von Hartmetalleinsätzen in die Form eingelegt und zu einem Verbundeinsatz zusammengefügt werden.

6. Verfahren nach einem vorstehenden Anspruch 1 bis 5, wobei der Verbundartikel auf Hartmetallbasis in eine Sandform gegossen wird.

7. Verfahren nach einem vorstehenden Anspruch 1 bis 6, wobei es sich bei der Eisenmatrix um Sphäroguss handelt.

8. Verbundartikel auf Hartmetallbasis, erhalten mit einem Verfahren nach einem der Ansprüche 1 bis 7.

9. Verschleißteil eines Schüttgutbrechers oder einer Schüttgutfördervorrichtung, umfassend mindestens einen Verbundartikel auf Hartmetallbasis nach Anspruch 8.

## Revendications

1. Procédé de fabrication d'un article composite à base de carbure cémenté, l'article composite à base de carbure cémenté étant une pièce d'usure ou une partie de celle-ci, le procédé comprenant :
le placement d'au moins un insert en carbure cémenté (10, 20, 30, 40, 50, 60, 70, 80) dans un moule ; et
le coulage de l'insert en carbure cémenté dans une matrice de fer dans le moule pour former l'article composite à base de carbure cémenté,
dans lequel l'insert composite à base de carbure cémenté est un échafaudage présentant une structure ouverte et dans lequel l'insert en carbure cémenté est imprimé en 3D puis fritté.

2. Procédé selon la revendication 1, dans lequel la structure ouverte de l'échafaudage poreux présente une structure en treillis.

3. Procédé selon la revendication 1 ou 2, dans lequel la structure en treillis de l'échafaudage poreux comprend une configuration périodique régulière d'unités structurelles agencées ensemble.

4. Procédé selon les revendications 1 à 3, dans lequel l'insert en carbure cémenté comprend un corps avec des dépressions de surface configurées pour recevoir des fines de matériau en vrac pendant l'utilisation.

5. Procédé selon une quelconque revendication 1 à 4 précédente, dans lequel une pluralité d'inserts en carbure cémenté sont placés dans le moule et agencés ensemble pour former un insert composite.

6. Procédé selon une quelconque revendication 1 à 5 précédente, dans lequel l'article composite à base de carbure cémenté est coulé dans un moule en sable.

7. Procédé selon une quelconque revendication 1 à 6 précédente, dans lequel la matrice de fer est du fer nodulaire.

8. Article composite à base de carbure cémenté obtenu par un procédé selon l'une quelconque des revendications 1 à 7.

9. Pièce d'usure d'un concasseur de matériaux en vrac ou d'un dispositif de manutention de matériaux en vrac, comprenant au moins un article composite à base de carbure cémenté selon la revendication 8.
